# EUROPÄISCHE PATENTSCHRIFT

(11) **EP 0 978 929 B1**
(45) Veröffentlichungstag und Bekanntmachung des Hinweises auf die Patenterteilung: **02.10.2002**
(21) Anmeldenummer: 99114486.6
(22) Anmeldetag: 23.07.1999
(51) Int. Cl.: H02K 15/12

(54) **Verfahren und Vorrichtung zum Imprägnieren von Leiterstäben für die Statorwicklung einer elektrischen Maschine**
Method and apparatus for impregnating bar conductors for the stator winding of an electrical machine
Procédé et dispositif d'imprégnation de barres conductrices pour l'enroulement statorique d'une machine électrique

(30) Priorität: 05.08.1998 DE 19835361
(43) Veröffentlichungstag der Anmeldung: 09.02.2000
(73) Patentinhaber: Alstom, 75116 Paris (FR)
(72) Erfinder: Klee, Peter, Dipl.-Ing., 69483 Waldmichelbach (DE)
(74) Vertreter: Dreiss, Fuhlendorf, Steimle & Becker

(56) Entgegenhaltungen:
- US-A- 4 405 553
- US-A- 5 771 563
- PATENT ABSTRACTS OF JAPAN vol. 1995, no. 11, 26. Dezember 1995 (1995-12-26) & JP 07 231622 A (FUJI ELECTRIC CO LTD), 29. August 1995 (1995-08-29)
- PATENT ABSTRACTS OF JAPAN vol. 1999, no. 02, 26. Februar 1999 (1999-02-26) & JP 10 295063 A (TOSHIBA CORP), 4. November 1998 (1998-11-04)

## Beschreibung

Die Erfindung betrifft ein Verfahren zum Imprägnieren von Leiterstäben für die Statorwicklung einer elektrischen Maschine, welche Leiterstäbe jeweils mit einer Isolierung an ihrer Oberfläche versehen sind, die durch Umwickeln jedes Leiterstabes mit einem Isolierband, vorzugsweise mit einem glas- oder glimmerhaltigem Isolierband, hergestellt wird, das in einer Imprägnierwanne in Verbindung mit einem Autoklaven mit einem Isoliermittel als Imprägnierfluid, vorzugsweise aus aushärtbarem Kunstharz, getränkt wird, wobei die Leiterstäbe vor dem Aushärten des Imprägnierfluids in einem Preßwerkzeug auf Form und Maß gepreßt werden.

Es ist allgemein bekannt, daß die Leiterstäbe für die Statorwicklung von elektrischen Maschinen mit einer Isolierung versehen werden, bevor sie in die hierfür vorgesehenen Nuten des Stators eingesetzt werden.

Die Isolierung der Leiterstäbe besteht üblicherweise aus einer Umwicklung mit einem glimmerhaltigen Isolierband beziehungsweise aus einem Glimmerband, welches mit einem Imprägnierfluid getränkt wird. Das Imprägnierfluid besteht vorzugsweise aus einem aushärtbaren Kunstharz und dient einerseits der Fixierung der Isolierwicklung sowie andererseits einer Verbesserung der Isolierung, indem eine mögliche Feuchtigkeitsaufnahme hierdurch verhindert wird.

Das Aufbringen des Imprägniermittels erfolgt üblicherweise in einer sogenannten Imprägnierwanne, die in einem Autoklaven angeordnet ist. Dabei wird zunächst im Autoklaven kurzzeitig ein Unterdruck eingestellt, welcher mögliche Gasansammlungen zwischen der Umwicklung und dem Leiterstab entfernt, welche ein Hindernis für die Aufnahme des Imprägnierfluids bilden könnten.

Zur Imprägnierung wird die Imprägnierwanne dann mit dem Imprägnierfluid gefüllt und der betreffende Leiterstab eingetaucht, der hierbei von dem Imprägnierfluid benetzt wird. Anschließend wird im Autoklaven ein Überdruck eingestellt, welcher dafür sorgt, daß das Imprägnierfluid in die Isolationsumwicklung eindringt. Sobald sichergestellt ist, daß alle Hohlräume in der Isolationsumwicklung mit Imprägnierfluid gefüllt sind, wird wieder Umgebungsdruck im Autoklaven eingestellt und das überschüssige Imprägnierfluid in Vorratsbehälter zurückgefüllt.

Da die zur Überflutung eines Leiterstabes in der Imprägnierwanne erforderliche Menge an Imprägnierfluid etwa das 10 bis 50-fache der Menge beträgt, die tatsächlich zur Imprägnierung eines Leiterstabes benötigt wird, und weil der jeweils erforderliche Überschuß möglichst wiederverwendet werden soll, zum Beispiel zur Schonung der Ressourcen sowie um die Entsorgungsproblematik derartiger Kunstharze zu verringern, muß das Imprägnieren bei bestimmten Bedingungen erfolgen, zum Beispiel bei entsprechend niedriger Temperatur, welche die Harzstabilität nicht oder nur unwesentlich beeinträchtigen, da anderenfalls die erneute Verarbeitbarkeit des überschüssigen Imprägnierfluids nicht mehr gewährleistet ist.

Dementsprechend wird die Viskosität des Imprägnierfluids so eingestellt, daß einerseits die Durchimprägnierung der Umwicklung gewährleistet ist und daß andererseits während des Aushärtens kein Imprägnierfluid mehr austritt. Nach der Imprägnierung, das heißt nach der Tränkung der Umwicklung mit Imprägnierfluid, erfolgt die Aushärtung des Imprägnierfluids, vorzugsweise bei erhöhter Temperatur, um die Härtedauer zu verkürzen.

Im Hinblick auf die geforderte Kontur- und Maßhaltigkeit der einbaufertigen Leiterstäbe werden diese vor oder während des Imprägnierens einer Pressung unterworfen, welche sicherstellen soll, daß die Querschnitte der Leiterstäbe beim Einbau in den Stator nicht zu Passungsproblemen führen. Diese Pressung kann auf unterschiedliche Weise erfolgen, nämlich örtlich oder total beziehungsweise sowohl bei Umgebungstemperatur als auch bei erhöhter Temperatur, zum Beispiel in einem Ofen. Auch kann gegebenenfalls die Pressung vor dem Imprägnieren als sogenannte Trockenpressung durchgeführt werden im Unterschied zum sogenannten Naßpressen, das nach erfolgter Imprägnierung durchgeführt wird. Vor der Naßpressung wird der Leiterstab mit einer Trennfolie umwickelt, welche ein Anhaften des Preßwerkzeuges am Leiterstab verhindern soll.

Ein weiterer wichtiger Grund für die Pressung der Isolation ist ferner die Erzielung optimaler elektrischer und mechanischer Eigenschaften, die wesentlich von dem Verhältnis der Anteile an Imprägnierfluid zu Glimmer beziehungsweise Glas abhängen.

Die Durchführung der Imprägnierung gemäß der vorstehend beschriebenen Verfahrensweise ist, wie erkennbar, sehr fertigungsaufwendig und damit ausgesprochen zeitintensiv. Daher ist es, ausgehend von diesem Stand der Technik, Aufgabe der Erfindung, ein Verfahren der eingangs genannten Art dahingehend weiterzuentwikkeln, daß bei gleichzeitig geringerem Mengenbedarf an Imprägnierfluid der erforderliche Zeitbedarf für die Imprägnierung eines Leiterstabes vermindert ist

Diese Aufgabe wird in Verbindung mit dem Oberbegriff erfindungsgemäß durch die kennzeichnenden Merkmale des Anspruchs 1 gelöst. Weitere vorteilhafte Ausgestaltungen und Verbesserungen der Erfindung sind in den Unteransprüchen angegeben.

Entsprechend der Erfindung wird demzufolge jeder eine fertige Isolierumwicklung aufweisende Leiterstab auf seiner ganzen Länge mit einer druck- und fluiddichten Hülle versehen. Dabei wird der umhüllte Leiterstab in einer Preßvorrichtung allseitig mit einem Druck p₁ beaufschlagt, wobei das Imprägnierfluid in den Zwischenraum zwischen dem isolierten Leiterstab und der Hülle mit einem Druck p₂ < p₁ eingefüllt wird und der so auf seiner ganzen Länge mit Imprägnierharz beaufschlagte, von der Hülle umgebene Leiterstab bei Aushärtetemperatur auf Form und Maß gepreßt wird.

Wie im Vergleich zu der bisherigen Verfahrensweise deutlich wird, können bei dem erfindungsgemäßen Verfahren sowohl der apparative Aufwand als auch der verfahrenstechnische Aufwand beträchtlich reduziert werden. Anstelle der Tränkung in einer voluminösen Imprägnierwanne ist nun nur noch die unter Druck erfolgende Beaufschlagung mit dem Imprägnierfluid innerhalb einer vergleichsweise eng an dem Leiterstab anliegenden Hülle vorgesehen. Diese Hülle übernimmt gleichzeitig auch die Aufgabe als Trennfolie, um Verklebungen mit den Spannbacken einer Preßvorrichtung zu verhindern. Hierbei wird in Weiterbildung der Erfindung die schlauchähnliche, als Trennfolie gegenüber der Preßvorrichtung dienende Hülle nach erfolgter Aushärtung abgenommen, das heißt je nach Art des für die Hülle verwendeten Materials mit einhergehender Zerstörung oder so, daß sie erneut verwendbar ist.

Die erwähnte Beaufschlagung mit Spannbacken einer Preßvorrichtung des Leiterstabes dient zur Gewährleistung der erforderlichen Kontur- und Maßhaltigkeit während des Aushärtevorganges des Imprägnierfluids., wobei die vorgesehene Pressung des Leiterstabes mit einer Temperaturbeaufschlagung einhergehen kann.

Insbesondere der letztgenannte Aspekt besitzt ein großes Potential an Verfahrensvereinfachung, da durch die Aushärtung in der Preßform bei erhöhter Temperatur einerseits die ursprüngliche Fertigungsdauer von ca. 50 h deutlich reduziert wird auf etwa ein fünftel der Zeit und gleichzeitig die Kontur- und Maßhaltigkeit erheblich verbessert wird, was sich zugunsten der Montagezeit der Leiterstäbe im Stator auswirkt, da Nacharbeiten zwecks Einpassung praktisch nicht erforderlich sind.

Entsprechend einer vorteilhaften Weiterbildung des erfindungsgemäßen Verfahrens wird der Leiterstab in seinem linearen mittleren Bereich in einer ortsfesten Preßvorrichtung mit biegesteifen Preßbacken und an seinen gekrümmten beziehungsweise abgewinkelten Enden jeweils mittels Preßbacken einer beweglichen Preßvorrichtung allseitig beaufschlagt. Mit Hilfe dieser Verfahrensweise können langwierige Einpaßarbeiten zur exakten Beaufschlagung entfallen.

Im Hinblick auf die erwähnte Aushärtung des Imprägnierfluids erweist es sich als günstig, wenn das Aushärten des Imprägnierfluids bei erhöhter Temperatur, vorzugsweise bei T > 80°, erfolgt.

Eine weitere bevorzugte Variante des erfindungsgemäßen Verfahrens sieht vor, daß das Imprägnierfluid bei niedriger Temperatur, zum Beispiel Raumtemperatur, in die den Leiterstab umschließenden Hülle zugeführt wird und daß der Fluiddruck des Imprägnierfluids während des Aushärtens des Imprägnierfluids aufrechterhalten wird.

Eine Vorrichtung zum Imprägnieren eines Leiterstabes für eine Statorwicklung einer elektrischen Maschine gemäß dem bisher angewendeten Verfahren weist eine Imprägniereinrichtung auf, welche das zur Tränkung des mit einem Isolierband versehenen Leiterstabes vorgesehene Imprägnierfluid aufnimmt, sowie eine ortsfeste Preßvorrichtung mit Spannbacken, in welche der Leiterstab zumindest zum Teil einsetzbar und beaufschlagbar ist.

Mit dieser bislang eingesetzten Vorrichtung kann das erfindungsgemäße Verfahren nicht ohne weiteres durchgeführt werden, da hierbei die Tränkung der Isolation des Leiterstabes beispielsweise separat von der anschließend erfolgenden Pressung stattfindet.

Es ist daher eine weitere Aufgabe der Erfindung, eine Vorrichtung zu schaffen, mit der das erfindungsgemäße Verfahren durchgeführt werden kann und die gleichzeitig entsprechend einfach gestaltet ist, so daß ihre Handhabung ebenfalls einfach ist.

Diese Aufgabe wird durch die Merkmale des Anspruchs 6 gelöst.

Zur Lösung dieser Aufgabe ist daher erfindungsgemäß vorgesehen, daß die Imprägniereinrichtung von einer schlauchähnlichen flexiblen Hülle gebildet ist, welche den Leiterstab auf seiner ganzen Länge umgibt, daß eine Vorrichtung zur Befüllung der schlauchähnlichen Hülle mit unter Druck gesetztem Imprägnierfluid vorgesehen ist, daß die Spannbacken der ortsfesten Preßvorrichtung zumindest den geradlinigen Bereich des Leiterstabes allseitig umgeben und daß zur Pressung der an dessen geradlinigen Bereich anschließenden gekrümmten oder abgewinkelten Bereiche des Leiterstabes jeweils bewegliche, manschettenähnlich ausgebildete Preßvorrichtungen vorgesehen sind, welche den Leiterstab allseitig umgeben.

Zur einfachen Handhabung sind die Manschettenähnlich ausgebildete Preßvorrichtungen von Druckschläuchen gebildet, welche jeweils um die Enden des betreffenden Leiterstabes gelegt sind. Diese Druckschläuche sind in gewissem Maße flexibel, so daß sie sich an die Abmessungen der Leiterstäbe anpassen lassen und andererseits auch die von einer Geraden abweichenden Endbereiche der Leiterstäbe komplett beaufschlagen.

In weiterer Ausgestaltung der Erfindung ist die schlauchähnliche Hülle druck- und fluiddicht ausgebildet und weist einen Querschnitt auf, der geringfügig größer ist als der Querschnitt des mit der Isolation versehenen, das heißt mit dem Isolierband umwickelten, Leiterstabes. Dabei kann in bevorzugter Weiterbildung der Erfindung die schlauchähnliche Hülle als Schrumpfschlauch ausgebildet sein.

Eine weiteres vorteilhaftes Merkmal der erfindungsgemäßen Vorrichtung besteht darin, daß die schlauchähnliche Hülle als Trennfolie gegenüber der Preßvorrichtung dient und nach erfolgter Aushärtung abnehmbar ist. Je nach verwendetem Material kann hierbei vorgesehen sein, daß die Hülle beim Abnehmen zerstört wird. Dies ermöglicht eine rasche Freilegung des Leiterstabes. Ebenso kann aber auch vorgesehen sein, daß die Hülle aus einem vom Imprägniermittel nicht benetzbaren Material besteht beziehungsweise mit einer speziellen Beschichtung, zum Beispiel aus PTFE, versehen ist, so daß nach dem nicht zerstörenden Abnehmen eine Wiederverwendung der Hülle möglich ist.

Diese und weitere vorteilhafte Ausgestaltungen und Verbesserungen der Erfindung sind Gegenstand der Unteransprüche.

Anhand eines in der schematischen, nicht maßstäblichen Zeichnung dargestellten Ausführungsbeispiels sollen die Erfindung, vorteilhafte Ausgestaltungen und Verbesserungen sowie besondere Vorteile der Erfindung näher erläutert und beschrieben werden.

Es zeigen:
- Fig. 1: einen Längsschnitt durch einen zur Imprägnierung in einer Hülle angeordneten Leiterstab in einem ersten Fertigungsschritt;
- Fig. 2: einen Längsschnitt durch einen zur Imprägnierung in einer Hülle angeordneten Leiterstab in einem zweiten Fertigungsschritt;
- Fig. 3: einen Längsschnitt durch einen zur Imprägnierung in einer Hülle angeordneten Leiterstab in einem dritten Fertigungsschritt;
- Fig. 4: eine Querschnittsansicht durch einen zur Imprägnierung in einer Hülle angeordneten Leiterstab gemäß Fig. 3 und
- Fig. 5: einen Teillängsschnitt durch den zur Imprägnierung in einer Hülle angeordneten Leiterstab gemäß Fig. 4.

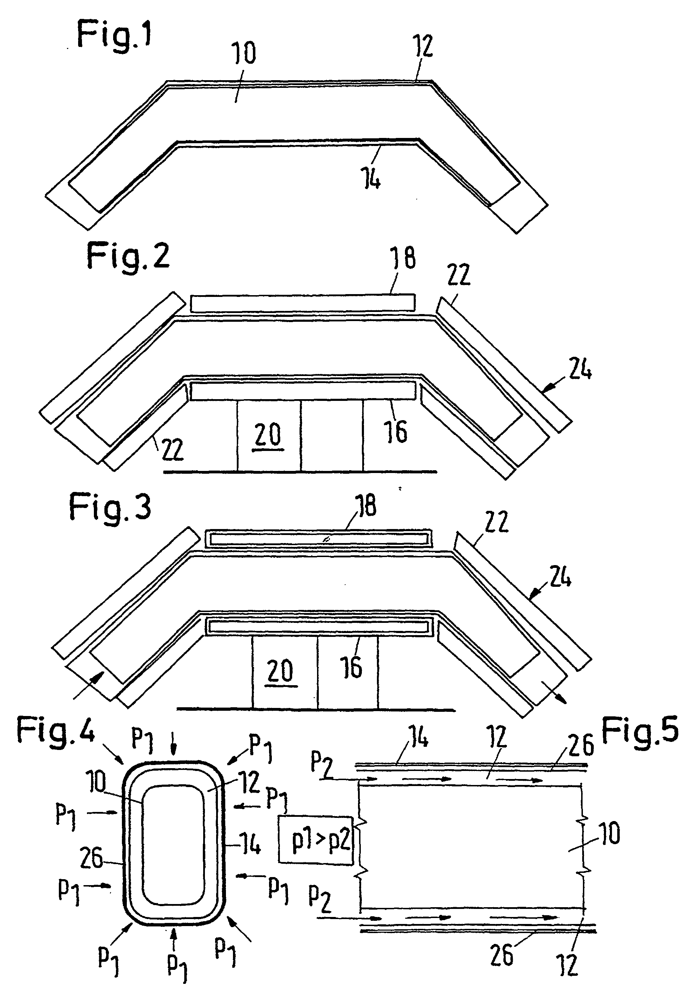

In Fig. 1 ist ein Leiterstab 10 im Längsschnitt dargestellt, der mit einer aus umwikkeltem Isolierband gebildeten Isolation 12 versehen ist. Die hierin gezeigten Maßverhältnisse sind nicht maßstäblich und nicht ohne weiteres übertragbar.

Der mit der Isolation 12 versehene Leiterstab 10 ist mit einer Hülle 14 überzogen, die in engem Abstand den Leiterstab 10 umgibt und aus einem flexiblen, druck- und fluiddichten Material besteht. Die angegebene Flexibilität bezieht sich darauf, daß die Hülle 14 geeignet ist, axialen Richtungsänderungen in der Längserstreckung des Leiterstabes 10 zu folgen, das heißt insbesondere an den abgewinkelten, zum sogenannten Wickelkopf weisenden Endbereichen des Leiterstabes 10.

Die in Fig. 2 ebenfalls schematisch dargestellte Anordnung zeigt den in Fig. 1 gezeigten Leiterstab 10 mit einer Isolation 12 und umgeben von der Hülle 14, welche an den Enden des Leiterstabes 10 übersteht.

Zusätzlich sind Spannbacken 16, 18 einer ortsfesten Heißpresse 20 sowie Spannelemente 22 einer nicht näher gezeigten mobilen Preßvorrichtung dargestellt, welche den Leiterstab 10 allseitig beaufschlagen. Bei dieser Längsschnittdarstellung sind die jeweils parallel zur Zeichnungsebene verlaufenden Spannbacken und Spannelemente nicht dargestellt.

Die Funktion der aus der Heißpresse 20 und den Spannelementen 22 gebildeten Spannvorrichtung 24 ist es in diesem Verfahrensstadium die Kontur- und Maßhaltigkeit des mit der Isolation 12 versehenen Leiterstabes 10 zu gewährleisten.

In Fig. 3 ist ein drittes Verfahrensstadium dargestellt, bei welchem in den zwischen dem mit der Isolation 12 versehenen Leiterstab 10 und der Hülle 14 gebildeten spaltähnlichen Zwischenraum 26 an einem der beiden Enden ein Imprägnierfluid zugeführt wird, das den Leiterstab 10 auf seiner ganzen Länge umströmt. Sobald das Imprägnierfluid das entgegengesetzte Ende des Leiterstabes 10 erreicht hat, wird dieses (in Fig. 3 auf der rechten Seite) druck- und fluiddicht verschlossen.

Nun wird mit einem erhöhten Druck p₂ der kleiner ist als der von der Spannvorrichtung 24 ausgeübte Druck p₁, der Zwischenraum 26 zwischen Leiterstab 10 und der als Tränk- oder Imprägnierwanne dienenden Hülle 14 mit dem Imprägnierfluid beaufschlagt, während gleichzeitig die unter dem Druck p₁ stehende Spannvorrichtung die Außenkontur des Leiterstabes 10 beziehungsweise der hieran eng anliegenden Hülle 14 beaufschlagt.

Während dieser Beaufschlagung ist die Heizung der Heizpresse 20 eingeschaltet, so daß gleichzeitig mit der Druckbeaufschlagung die Aushärtung des vorzugsweise als aushärtendes Kunstharz vorgesehenen Imprägnierfluids stattfindet.

In Fig. 4 ist zur Veranschaulichung dieses Verfahrensablaufes ein Querschnitt und in Fig. 5 ein Teillängsschnitt durch die in Fig. 3 gezeigte Anordnung wiedergegeben, wobei die Spannbacken 16, 18 hier mittels der den allseitig wirkenden Druck symbolisierenden radialen Pfeile dargestellt sind.

Das stirnseitig an einem Ende eingespeiste Imprägnierfluid durchströmt hierbei die den Leiterstab 10 aufnehmende Hülle 14 in ihrer gesamten Länge und versucht hierbei sich auszubreiten. Nach außen stellt die Hülle 14 ein unüberwindliches Hindemis dar, so daß die einzige verbleibende Möglichkeit die um den Leiterstab 10 gewickelte Isolation 12 ist. Hier dringt das Imprägnierfluid dem Druckgefälle folgend ein und durchtränkt das vorzugsweise aus Glimmer bestehende, die Isolation 12 bildende Isolierband.

Infolge der einhergehenden Pressung, die verfahrensgemäß bei einem höheren Druck als seither möglich erfolgen kann, wird ein günstigeres Verhältnis des die Isolationsqualität bestimmenden Glimmergehaltes gegenüber dem Imprägnierfluid-Anteil erreicht. Eine verbesserte Isolation ist daher das Resultat dieser Maßnahme, ganz abgesehen von einer wesentlich vereinfachten Handhabung, die deutliche Zeit- und damit nicht zuletzt auch Kostenvorteile mit sich bringt.

In Verbindung mit der Preßvorrichtung 24 erfolgt die Einspeisung des Imprägnierfluids quasi hydrostatisch. Damit ist eine gleichmäßige Durchdringung der Isolation mit dem Imprägnierfluid gewährleistet, wobei aufgrund des geringen Volumens des Spaltraums 26 die zur Fixierung der Isolation vorgesehene Menge an Imprägnierfluid bereits ausreichend begrenzt ist, so daß der angestrebte Überschuß an festem Isoliermaterial, vorzugsweise Glimmer, gegenüber der eingebrachten Menge an flüssigem Isoliermittel eingehalten wird.

## Patentansprüche

1. Verfahren zum Imprägnieren von Leiterstäben für die Statorwicklung einer elektrischen Maschine, welche Leiterstäbe (10) jeweils mit einer Isolierung (12) an ihrer Oberfläche versehen sind, die durch Umwickeln jedes Leiterstabes (10) mit einem Isolierband, vorzugsweise mit einem glimmerhaltigem Isolierband, hergestellt wird, das in einer Imprägnierwanne (14) in Verbindung mit einem Autoklaven mit einem Isolierfluid, vorzugsweise aushärtbarem Kunstharz, getränkt wird, wobei die Leiterstäbe vor dem Aushärten des Imprägnierfluids in einem Preßwerkzeug (24) auf Form und Maß gepreßt werden, **dadurch gekennzeichnet, daß** jeder mit der fertigen Isolierung (12) versehene Leiterstab (10) auf seiner ganzen Länge mit einer druck- und fluiddichten Hülle (14) versehen wird, daß der umhüllte Leiterstab in einer Preßvorrichtung (24) allseitig mit einem Druck p₁ beaufschlagt wird, daß in den Zwischenraum (26) zwischen dem isolierten Leiterstab (10) und der Hülle (14) das Imprägnierfluid mit einem Druck p₂ < p₁ eingefüllt wird und daß der so auf seiner ganzen Länge mit Imprägnierharz beaufschlagte, von der Hülle (14) umgebene Leiterstab (10) bei Aushärtetemperatur auf Form und Maß gepreßt wird.

2. Verfahren nach Anspruch 1, **dadurch gekennzeichnet, daß** der Leiterstab in seinem linearen mittleren Bereich in einer ortsfesten Preßvorrichtung (20) mit biegesteifen Spannbacken (16, 18) und an seinen gekrümmten beziehungsweise abgewinkelten Enden jeweils mittels Preßbacken (22) einer beweglichen Preßvorrichtung allseitig beaufschlagt wird.

3. Verfahren nach Anspruch 1 oder 2, **dadurch gekennzeichnet, daß** das Imprägnierfluid bei niedriger Temperatur, zum Beispiel Raumtemperatur, in die den Leiterstab (10) umschließenden Hülle (14) zugeführt wird und daß der Fluiddruck des Imprägnierfluids während des Aushärtens des Imprägnierfluids aufrechterhalten wird.

4. Verfahren nach Anspruch 3, **dadurch gekennzeichnet, daß** das Aushärten des Imprägnierfluids bei erhöhter Temperatur, vorzugsweise bei T > 90°, erfolgt.

5. Verfahren nach einem der vorherigen Ansprüche, **dadurch gekennzeichnet, daß** die schlauchähnliche Hülle (14) als Trennfolie gegenüber den Spannbakken (16, 18, 22) der Preßvorrichtung (24) dient und nach erfolgter Aushärtung abgenommen wird.

6. Vorrichtung zum Imprägnieren eines Leiterstabes (10) für eine Statorwicklung einer elektrischen Maschine gemäß dem Verfahren nach einem der vorherigen Ansprüche mit einer Imprägniereinrichtung (14), welche das zur Tränkung des mit einer Isolation (12) versehenen Leiterstabes (10) vorgesehene Imprägnierfluid aufnimmt, und mit einer ortsfesten Preßvorrichtung (20) mit Spannbacken (16, 18), in welche der Leiterstab (10) zumindest zum Teil einsetzbar und beaufschlagbar ist, **dadurch gekennzeichnet, daß** die Imprägniereinrichtung von einer schlauchähnlichen flexiblen Hülle (14) gebildet ist, welche den Leiterstab (10) auf seiner ganzen Länge umgibt, daß eine Vorrichtung zur Befüllung der schlauchähnlichen Hülle mit unter Druck gesetztem Imprägnierfluid vorgesehen ist, daß die Spannbacken (16, 18) der ortsfesten Preßvorrichtung (20) zumindest den geradlinigen Bereich des Leiterstabes (10) allseitig umgeben und daß zur Pressung der an dessen geradlinigen Bereich anschließenden gekrümmten oder abgewinkelten Bereiche des Leiterstabes (10) jeweils bewegliche, manschettenähnlich ausgebildete Preßvorrichtungen (22) vorgesehen sind, welche den Leiterstab (10) allseitig umgeben.

7. Vorrichtung nach Anspruch 6, **dadurch gekennzeichnet, daß** die manschettenähnlich ausgebildeten Preßvorrichtungen (22) von Druckschläuchen gebildet sind, welche jeweils um die Enden des betreffenden Leiterstabes (10) gelegt sind.

8. Vorrichtung nach Anspruch 6 oder 7, **dadurch gekennzeichnet, daß** die schlauchähnliche Hülle (14) druck- und fluiddicht ausgebildet ist und einen Querschnitt aufweist, der geringfügig größer als der Querschnitt des mit der Isolation umwickelten Leiterstabes (10) ist.

9. Vorrichtung nach einem der Ansprüche 6 bis 8, **dadurch gekennzeichnet, daß** die schlauchähnliche Hülle (14) als Schrumpfschlauch ausgebildet ist.

10. Vorrichtung nach einem der Ansprüche 6 bis 9, **dadurch gekennzeichnet, daß** die schlauchähnliche Hülle (14) als Trennfolie gegenüber den Spannbakken (16, 18, 22) der Preßvorrichtung (24) dient und daß die schlauchähnliche Hülle (14) nach erfolgter Aushärtung abnehmbar ist.

## Claims

1. Method for the impregnation of conductor rods for the stator winding of an electric machine, which conductor rods (10) are each provided with an insulation (12) on their surface, established by the enveloping of each conductor rod (10) with an insulating tape, preferentially with a mica-containing insulating tape that is soaked in an impregnating tank (14) in conjunction with an autoclave with an insulating fluid, preferentially hardening synthetic resin, where the conductor rods are pressed before hardening of the impregnating fluids in a pressing tool (24) to shape and dimension, **characterised in that** each conductor rod (10) provided with the finished insulation (12) is provided with a pressure-tight and a liquid-tight sheath (14) over its entire length, that the enveloped conductor rod is applied on all sides with a pressure p₁ in a pressing device (24), that the impregnating fluid is filled into the interim space (26) between the insulating conductor rod (10) and the sheath (14) with a pressure of p₂ < p₁, and that the conductor rod (10) enveloped by the sheath (14) and applied with impregnating resin over its entire length is pressed to shape and dimension at hardening temperature.

2. Method according to Claim 1, **characterised in that** the conductor rod (10) in its linear central zone is applied with pressure on all sides in a stationary pressing device (20) with flexural-stiff clamping jaws (16, 18) and at its bent and/or angled ends in each case by means of pressing jaws (22) of a movable pressing device.

3. Method according to Claim 1 or 2, **characterised in that** the impregnating fluid at low temperature, such as room temperature for example, is led back to the sheath (14) enveloping the conductor rod (10) and that the fluid pressure of the impregnating fluid is maintained during the hardening process of the impregnating fluid.

4. Method according to Claim 3, **characterised in that** the hardening of the impregnating fluid takes place at increased temperature, preferentially at T > 90 °C.

5. Method according to one of the previous claims, **characterised in that** the sheath (14), which is similar to a hose, serves the purpose as a separating foil opposite the clamping jaws (16, 18, 22) of the pressing device (24) and is taken off after the hardening is completed.

6. Device for the impregnation of a conductor rod (10) for a stator winding of an electric machine according to the method based on one of the previous claims with an impregnation facility (14) which accommodates the impregnating fluid envisaged for the soaking of the conductor rod (10) provided with an insulation (12), and with a stationary pressing device (20) with clamping jaws (16, 18) in which the conductor rod (10) can be at least partially located and applied with pressure, is **characterised in that** the impregnating facility is formed from a flexible sheath (14) similar to a hose, and this sheath envelopes the conductor rod (10) over its entire length, that a device for filling the hose-similar sheath with impregnating fluid under pressure is envisaged, that the clamping jaws (16, 18) of the stationary pressing device (20) surround at least the straight-line zone of the conductor rod on all sides and that, for the purpose of pressing of the bent or angled areas of the conductor rod (10) immediately following its straight-line zone, movable and collar-type pressing devices (22) are envisaged in each case, which surround the conductor rod (10) on all sides.

7. Device according to Claim 6, **characterised in that** the collar-type pressing devices (22) are formed from pressure hoses which are each placed around the ends of the respective conductor rod (10).

8. Device according to Claim 6 or 7, **characterised in that** the hose-similar sheath (14) is designed in a pressure-tight and fluid-tight manner and has a cross-section which is slightly larger than the cross-section of the conductor rod (10) enveloped with insulation.

9. Device according to one of the Claims 6 to 8, **characterised in that** the hose-similar sheath (14) is designed as a shrinkage hose.

10. Device according to one of the claims 6 to 9, **characterised in that** the hose-similar sheath (14) serves the purpose as a separation foil opposite the clamping jaws (16, 18, 22) of the pressing device (24) and that the hose-similar sheath (14) is removable after the hardening is completed.

## Revendications

1. Procédé d'imprégnation de barres conductrices pour l'enroulement statorique d'une machine électrique, lesquelles barres conductrices (10) sont chaque fois pourvues d'une isolation (12) sur leur surface, qui est réalisée avec un ruban isolant, de préférence d'un ruban isolant micacé, entourant chaque barre conductrice (10), ruban isolant qu'on imprègne d'un fluide isolant, de préférence d'une résine synthétique durcissable, grâce à une coque d'imprégnation (14) liée à un autoclave, les barres conductrices étant moulées dans une matrice de compression (24) avant le durcissement du fluide d'imprégnation pour leur donner leur forme et dimension, **caractérisé en ce que** chaque barre conductrice (10) pourvue de l'isolation (12) terminée est pourvue sur toute sa longueur d'une enveloppe (14) étanche au fluide et à la pression, que la barre conductrice enveloppée est soumise de tous les côtés à une pression p₁ dans un dispositif de compression (24), que le fluide d'imprégnation va être versé avec une pression p₂<p₁ dans l'espace libre entre la barre conductrice (10) et l'enveloppe (14) et que la barre conductrice ainsi alimentée sur toute sa longueur par la résine d'imprégnation et entourée de l'enveloppe (14) est moulée en forme et en dimension à la température de durcissement.

2. Procédé selon la revendication 1, **caractérisé en ce que** la barre conductrice, dans sa partie centrale linéaire, est soumise à un dispositif de compression (20) avec des mâchoires de serrage (16, 18) rigides à la flexion, et à ses extrémités courbés respectivement pliés, elle est à chaque fois soumise de tous les côtés à une mâchoire de compression (22) d'un dispositif de compression mobile.

3. Procédé selon la revendication 1 ou 2, **caractérisé en ce que** le fluide d'imprégnation dans l'enveloppe (14) entourant la barre conductrice (10) est porté à une température faible, par exemple la température ambiante, et que la pression du fluide d'imprégnation est maintenue pendant le durcissement du fluide d'imprégnation.

4. Procédé selon la revendication 3, **caractérisé en ce que** le durcissement du fluide d'imprégnation se produit pour une température élevée, de préférence à T>90°.

5. Procédé selon l'une des revendications précédentes, **caractérisé en ce que** l'enveloppe (14) semblable à une gaine sert de séparation par rapport à la mâchoire de serrage (16, 18, 22) du dispositif de compression (24) et s'enlève une fois le durcissement réalisé.

6. Dispositif d'imprégnation de barres conductrices (10) pour l'enroulement statorique d'une machine électrique conformément au procédé selon l'une des revendications précédentes avec un dispositif d'imprégnation (14), lequel abrite le fluide d'imprégnation prévu pour l'imprégnation de la barre conductrice (10) pourvue d'une isolation (12), et avec un dispositif de compression (20) fixe avec des mâchoires de compression (16, 18), dans lequel la barre conductrice (10) est au moins en partie à insérer et à admettre, **caractérisé en ce que** le dispositif d'imprégnation est fait d'une enveloppe flexible semblable à une gaine, qui entoure la barre conductrice (10) sur toute sa longueur, que l'on prévoit un dispositif de remplissage de l'enveloppe semblable à la gaine avec un fluide d'imprégnation sous pression, que les mâchoires de serrage (16, 18) du dispositif de compression (20) fixe entourent au moins la totalité de la partie rectiligne de la barre conductrice et que des dispositifs de compression (22) à chaque fois mobile faits semblables à des colliers de serrage sont prévus pour la compression des parties courbées ou pliées de la barre conductrice (10) raccordées à la partie rectiligne, lesquels dispositifs de compression entourent entièrement la barre conductrice (10).

7. Dispositif selon la revendication 6, **caractérisé en ce que** les dispositifs de compression (22) faits semblables à des colliers de serrage sont constitués de tuyaux à pression, lesquels sont chacun installés autour des extrémités de la barre conductrice (10) concernée.

8. Dispositif selon la revendication 6 ou 7, **caractérisé en ce que** l'enveloppe (14) semblable à une gaine est faite de manière à être étanche à la pression et au fluide et présente une section qui est légèrement plus grande que la section de la barre conductrice (10) enveloppée de l'isolation.

9. Dispositif selon les revendications 6 à 8, **caractérisé en ce que** l'enveloppe (14) semblable à une gaine est faite comme une gaine rétractable.

10. Dispositif selon les revendications 6 à 9, **caractérisé en ce que** l'enveloppe (14) semblable à une gaine sert de séparation par rapport à la mâchoire de serrage (16, 18, 22) du dispositif de compression (24) et que l'enveloppe (14) semblable à une gaine est amovible une fois le durcissement réalisé.
